# EUROPEAN PATENT SPECIFICATION

(11) **EP 3 637 287 B1**
(45) Date of publication and mention of the grant of the patent: **22.05.2024**
(21) Application number: 18199131.6
(22) Date of filing: 08.10.2018
(51) Int. Cl.: H04L 9/08, H04L 9/00, G06F 21/60, G06F 21/10, H04L 9/32

(54) **BLOCK CHAIN FOR LICENSE KEYS OF VARIABLE FREQUENCY DRIVES**
BLOCKCHAIN FÜR LIZENZSCHLÜSSEL VON ANSTEUERUNGEN MIT VARIABLER FREQUENZ
CHAÎNE DE BLOC POUR CLÉS DE LICENCE DE MÉCANISMES D'ENTRAÎNEMENT À FRÉQUENCE VARIABLE

(43) Date of publication of application: 15.04.2020
(73) Proprietor: ABB Schweiz AG, 5400 Baden (CH)
(72) Inventor: KOHVAKKA, Mikko, 00381 Helsinki (FI); TANILA, Teemu, 00381 Helsinki (FI); KOUKKARI, Juha, 00381 Helsinki (FI)
(74) Representative: Laine IP Oy

(56) References cited:
- US-A1- 2013 133 080
- US-A1- 2018 115 416
- ZHANG ZEHAO ET AL: "A Design of Digital Rights Management Mechanism Based on Blockchain Technology", 22 June 2018 (2018-06-22), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 32 - 46, XP047476572, ISBN: 978-3-642-17318-9 [retrieved on 2018-06-22] * page 41 - page 42; figure 6 *

## Description

### FIELD

The present invention relates to servicing variable frequency drives.

### BACKGROUND

Some features of variable frequency drive (VFD) software (SW) are licensed. An SW license may be a positive license or a negative license. A positive license enables features, such as IEC 61131 programming, dual use license, in-house applications or off-grid, on the VFD. A negative license restricts VFD operation to a specific hardware configuration or requires other SW licenses for activation of the licensed features.

A VFD may comprise SW from various licensors. Each licensor can supply SW to the VFD and apply both negative and positive licensing to the supplied SW. Therefore, changes to SW licenses and/or hardware (HW) configuration of the VFD may prevent activation of SW and consequently unavailability of the features provided by that SW. Document Zhang Zehao et al.: "A Design of Digital Rights Management Mechanism Based on Blockchain Technology", 22 June 2018 (2018-06-22), International conference on simulation, modelling, and programming for autonomous robots, SIMPAR 2010; Springer, Berlin, Heidelberg, PAGE(S) 32 - 46" is considered to be a relevant prior art in the field of licensing.

### SUMMARY OF THE INVENTION

The invention is defined by the features of the independent claims. Some specific embodiments are defined in the dependent claims.

According to a first aspect of the present invention, there is provided a method for a system for servicing variable frequency drives, comprising:
maintaining by the system a block chain for storing license keys and transactions corresponding to hardware configurations of variable frequency drives;
obtaining, by the system from a user device connected to the system, a hardware fingerprint identifying a hardware configuration of a variable frequency drive;
determining, by the system, whether the hardware fingerprint is different than a previous hardware fingerprint of the variable frequency drive;
when the hardware fingerprint is different than a previous hardware fingerprint, generating, by the system, based on the hardware fingerprint, one or more license keys corresponding to the hardware fingerprint for the variable frequency drive; and
causing to generate, by the system, a new block to the block chain, said new block comprising the generated license keys and transaction information corresponding to the hardware fingerprint.

According to a second aspect of the present invention, there is provided a method for a variable frequency drive, comprising:
maintaining by the variable frequency drive a block chain for storing license keys and transactions corresponding to hardware configurations of variable frequency drives;
generating, by the variable frequency drive, a hardware fingerprint identifying a hardware configuration of the variable frequency drive;
authenticating, by the variable frequency drive to a system for servicing variable frequency drives, using the generated hardware fingerprint;
downloading, by the variable frequency drive from the system, one or more software packages corresponding to the generated hardware fingerprint;
determining that the block chain comprises a new block comprising license keys corresponding to the generated hardware fingerprint; and
activating one or more functionalities of the variable frequency drive, by applying the license keys to the downloaded software packages.

According to a third aspect of the present invention there is provided a method for a licensor system, comprising:
maintaining, by the licensor system, a block chain for storing license keys and transactions corresponding to hardware configurations of variable frequency drives;
receiving, by the licensor system, a request from a system for servicing variable frequency drives to generate one or more license keys corresponding to a hardware fingerprint for a variable frequency drive;
generating, by the licensor system, the requested license keys;
transmitting, by the licensor system, the generated license keys to the system for servicing variable frequency drives; and
transmitting, by the licensor system, one or more software packages corresponding to the hardware fingerprint in response to receiving a request from the variable frequency drive.

According to a fourth aspect of the present invention there is provided a system for servicing variable frequency drives, comprising means for performing:
maintaining a block chain for storing license keys and transactions corresponding to hardware configurations of variable frequency drives;
obtaining from a user device connected to the system a hardware fingerprint identifying a hardware configuration of a variable frequency drive;
determining whether the hardware fingerprint is different than a previous hardware fingerprint of the variable frequency drive;
when the hardware fingerprint is different than a previous hardware fingerprint, generating based on the hardware fingerprint, one or more license keys corresponding to the hardware fingerprint for the variable frequency drive; and
generating based on the hardware fingerprint, one or more license keys corresponding to the hardware fingerprint for the variable frequency drive.

According to a fifth aspect of the present invention there is provided a variable frequency drive, comprising means for performing:
maintaining a block chain for storing license keys and transactions corresponding to hardware configurations of variable frequency drives;
generating a hardware fingerprint identifying a hardware configuration of the variable frequency drive;
authenticating to a system for servicing variable frequency drives, using the generated hardware fingerprint;
downloading the system one or more software packages corresponding to the generated hardware fingerprint;
determining that the block chain comprises a new block comprising license keys corresponding to the generated hardware fingerprint; and
activating one or more functionalities of the variable frequency drive (104), by applying the license keys to the downloaded software packages.

According to a sixth aspect of the present invention there is provided a licensor system, comprising means for performing:
maintaining, a block chain for storing license keys and transactions corresponding to hardware configurations of variable frequency drives;
receiving a request from a system for servicing variable frequency drives to generate one or more license keys corresponding to a hardware fingerprint for a variable frequency drive;
generating the requested license keys;
transmitting the generated license keys; and
transmitting one or more software packages corresponding to the hardware fingerprint in response to receiving a request from the variable frequency drive.

Further aspects of the present invention may comprise one or more aspects of
- the hardware fingerprint is used for encrypting license keys specific to the variable frequency drive
- the new block is generated after obtaining information indicating a purchase of a license is obtained from an online wallet of the user
- a request to generate at least part of the license keys is sent to a licensor system after information indicating a purchase of a license is obtained from an online wallet of the user
- after the new block is generated, the system is caused to synchronize the variable frequency drive with the new block
- a request for software packages corresponding to the hardware fingerprint is transmitted to a licensor system via a smart wallet of the variable frequency drive
- the block chain of the variable frequency drive is synchronized with the system for servicing variable frequency drives, and if the block chain comprises information of one or more new software packages, information indicating one or more new software licenses is sent to a user device, and downloading of the software packages is caused in response to receiving a request to install from the user device
- the software packages are distributed via an online wallet accessible to the variable frequency drive utilizing the hardware fingerprint.

### BRIEF DESCRIPTION OF THE DRAWINGS

Fig. 1 illustrates a system architecture for servicing variable frequency drives in accordance with at least some embodiments of the present invention;
Fig. 2 illustrates a method for servicing variable frequency drives in accordance with at least some embodiments of the present invention;
Fig. 3 illustrates a method for a variable frequency drive in accordance with at least some embodiments of the present invention;
Fig. 4 illustrates a method for a licensor system in accordance with at least some embodiments of the present invention;
Fig. 5 illustrates a sequence in accordance with at least some embodiments of the present invention;
Fig. 6 illustrates an example of block of block chain in accordance with at least some embodiments of the present invention;
Fig. 7 illustrates a method for servicing a variable frequency drive with license keys in connection with drive boot; and
Fig. 8 illustrates a method for servicing a variable frequency drive with license keys in connection with a hardware configuration change of the variable frequency drive.

### EMBODIMENTS

There is provided servicing variable frequency drives. License keys and transactions corresponding to hardware configurations of variable frequency drives are stored in a block chain. License keys of a variable frequency drive are generated based on a hardware fingerprint of the variable frequency drive, when the hardware fingerprint is changed. The generated license keys and transaction information are stored to the block chain. In this way service history transparency may be provided. Additionally, since the license keys are stored to the block chain, valid license keys may be updated from the block chain to the variable frequency drive.

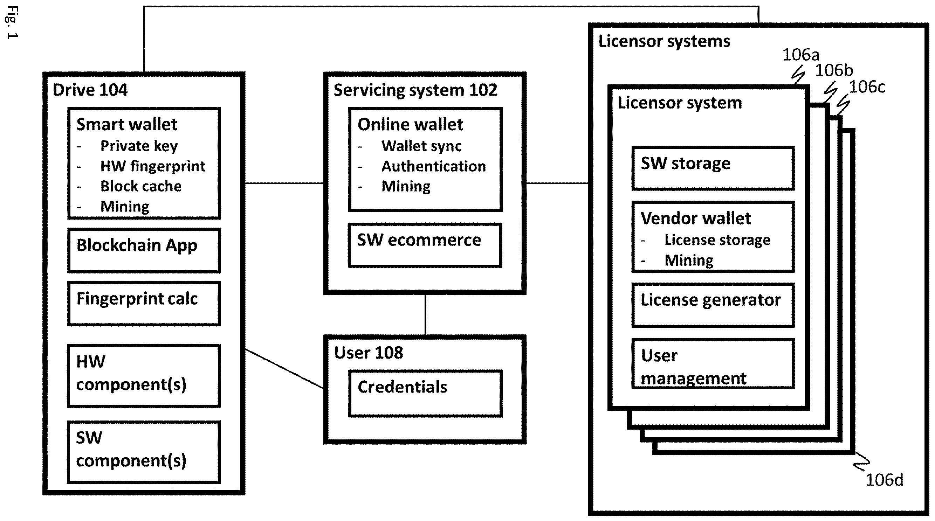

Fig. 1 illustrates system architecture for servicing variable frequency drives in accordance with at least some embodiments of the present invention. The system architecture comprises a variable frequency drive (VFD) 104, a system for servicing variable frequency drives 102, one or more licensor systems 106a, 106b, 106c, 106d and a user 108 which may be referred to as components of the system architecture.

The user 108 of the system architecture may be a user device via which the user, e.g. a service technician, may interact with one or more other components of the system architecture. It should be appreciated that the user device may be implemented as part of the variable frequency drive 104 or as a separate device. In an example a user device may comprise a user interface configured to obtain input from the user and/or output information to the user.

In an example, output of information to the user 108 may be provided by a user interface comprising one or more displays for displaying information to the user. Examples of the information displayed to the user may comprise a HW fingerprint of the VFD and/or secret key of the VFD. It should be appreciated that displaying information to the user is only one example of outputting information by the user device to the user and also tactile output, vibrations and/or audible output are viable and the user device may be equipped with corresponding means for outputting information to the user. Examples of displays comprise display devices for computers, touch screens.

In an example, input of information from the user 108 may be provided by a user interface comprising one or more of a button, a key, a keypad, a computer mouse, a joystick, a microphone, a touch screen and other means for obtaining input from the user. At least some of the information displayed by the user interface may be selectable by the user entering an input via the user interface.

It should be appreciated that the user interface may comprise one or more capabilities for outputting information to the user 108 and/or obtaining input from the user 108. The capabilities may comprise for example at least some of the capabilities provided by the above examples of user interface. In an example, a touch screen of the user interface may be capable of both displaying information to the user and obtaining input from the user via touch and/or gestures of the user. The touch screen may be provided for example on a tablet computer, whereby further capabilities may be provided via a speaker and a microphone of the tablet computer.

In an example the user device may be a computing device such as a handheld computing device or a desktop computer. Examples of handheld computing devices comprise a smart phone and a tablet computer. Handheld computing devices may be preferred user devices since they may be carried by the user, for example a service technician, to a deployment location of the variable frequency drive, whereby the handheld computing device may effectively serve for servicing the variable frequency drive.

The licensor system 106a, 106b, 106c, 106d may serve for generating license keys for enabling one or more functionalities of variable frequency drives. The license keys may be applied in a variable frequency drive to one or more software packages for unlocking the software packages. The unlocked software packages, when executed in the variable frequency drive, may enable the functionalities authorized by the license keys. The license keys may be generated after the user has purchased a license to the software packages.

In at least some embodiments, the licensor system 106 may comprise one or more of a storage for SW, a vendor wallet, a license generator and a user management functionality. The SW storage may be configured store one or more software packages for delivery to VFDs. The vendor wallet may be configured to store SW licenses and support mining of blocks in a block chain for storing license keys and transactions corresponding to hardware configurations of variable frequency drives. The license generator may be configured to generate license keys. The user management may be configured to manage user specific information, for example user profiles and license related information.

The variable frequency drive 104 may be a type of adjustable-speed drive used in electro-mechanical drive systems to control delivery of power to an AC motor. More particularly, the variable frequency drive may be capable of controlling AC motor speed and torque by varying motor input frequency and voltage.

The VFD 104 may comprise hardware (HW) components and SW components for providing functionalities of the VFD. Examples of the HW components comprise HW components for controlling delivery of power to an AC motor and controller units. Examples of the SW components comprise SW components for controlling the HW components.

The VFD 104 may comprise one or more of a block chain application, a fingerprint calculation application and a smart wallet.

The smart wallet of the VFD 104 may comprise a secret key of the VFD, a HW fingerprint of the VFD and block chain cache. The smart wallet may be configured to support mining of blocks in a block chain for storing license keys and transactions corresponding to hardware configurations of variable frequency drives. The secret key may be utilized together with the HW fingerprint in securing communications between one or more other components of the system architecture. In an example the secret key is a private key of the VFD. A combination of the HW fingerprint and the private key may form a key pair for public key cryptography or asymmetric cryptography, where the HW fingerprint may serve for the public key. In this way security of the communications may be provided between the VFD and one or more other components of the system architecture.

The block chain cache may cache a part of the block chain such that the VFD may maintain at least part of the block chain storing license keys and transactions corresponding to hardware configurations of variable frequency drives.

The block chain application is configured to execute a block chain functionality in the VFD. The block chain functionality may comprise one or more functionalities for maintaining the block chain. In example, the block chain application provides synchronizing the block chain stored at the VFD.

The fingerprint calculation application may be configured to calculate a HW fingerprint of the VFD. The HW fingerprint may identify a HW configuration of a variable frequency drive. It should be appreciated that the HW fingerprint is specific to the HW components over which the HW fingerprint is calculated, whereby a change of any of the HW components may result in a change of the HW fingerprint. In this way the changed HW fingerprint may enable identifying different HW configurations of the VFD.

The Servicing System (SS) 102 may be an online server function, for example a cloud service. The servicing system may comprise one or more of an e-commerce application and an online wallet of the user 108. The online wallet may be configured to support mining of blocks in a block chain for storing license keys and transactions corresponding to hardware configurations of variable frequency drives. The e-commerce application provides purchasing of SW licenses to the user. A purchase of SW licenses may be achieved by one or more transactions between the user and the e-commerce application such that licensors of the SW may be provided payment from the user and the user may obtain information indicating success of the payment. The online wallet of the user may be accessed by the user entering his/her credentials by via the user interface.

In at least some embodiments, the servicing system, licensor system 106, user 108 and the VFD 104 may be connected by a communications network. Non-limiting examples of connections between the components of the system architecture are illustrated by lines between the components of Fig. 1. The communications network may be at least capable of communications of data between the connected components. Examples of the communications network comprise wired and wireless communications networks capable of supporting communications using the Internet protocol suite.

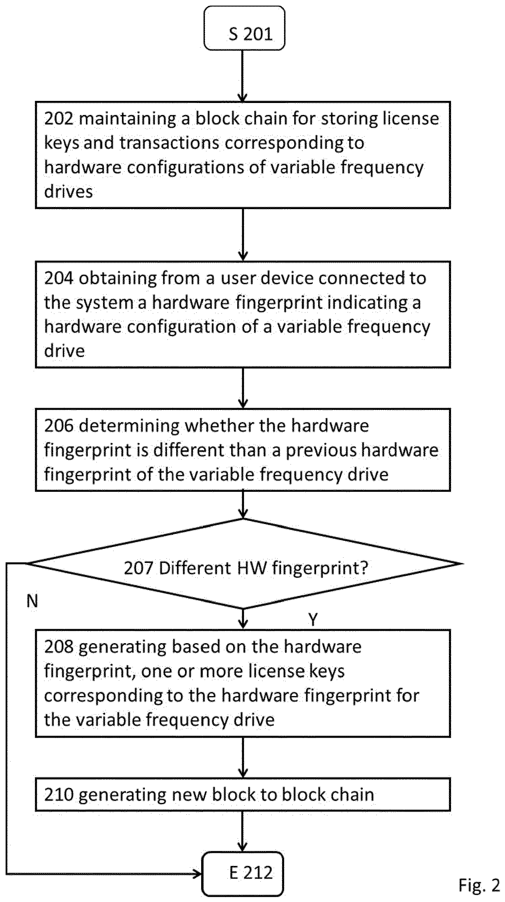

Fig. 2 illustrates a method for servicing variable frequency drives in accordance with at least some embodiments of the present invention. The method may be performed by a servicing system 102 described with Fig. 1. Phase 201 comprises starting the method, when the servicing system is capable of communicating with other components of the system architecture.

Phase 202 comprises maintaining by the servicing system a block chain for storing license keys and transactions corresponding to hardware configurations of variable frequency drives.

Phase 204 comprises obtaining, by the servicing system from a user device connected to the servicing system, a hardware fingerprint identifying a hardware configuration of a variable frequency drive.

Phase 206 comprises determining, by the servicing system, whether the hardware fingerprint is different than a previous hardware fingerprint of the variable frequency drive.

In phase 207, when the hardware fingerprint is different than a previous hardware fingerprint, phase 208 is performed. Phase 208 comprises generating, by the servicing system, based on the hardware fingerprint, one or more license keys corresponding to the hardware fingerprint for the variable frequency drive.

Phase 210 comprises causing to generate, by the servicing system, a new block to the block chain, said new block comprising the generated license keys and transaction information corresponding to the hardware fingerprint.

In an example, the transaction information comprises information indicating a time of license purchase, a purchaser of the license, license type who bought the license, license type, for example. The transaction information may comprise also other information, for example information that facilitates the transaction information to serve as a receipt of the purchased license.

In phase 212 the block chain comprises the new license keys are valid for the HW fingerprint of the VFD and the method ends.

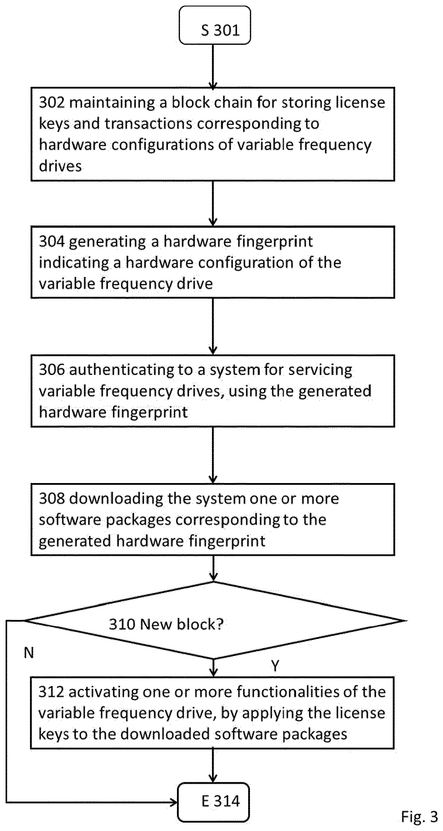

Fig. 3 illustrates a method for a variable frequency drive in accordance with at least some embodiments of the present invention. The method may be performed by a variable frequency drive 104 described with Fig. 1. Phase 301 comprises starting the method, when the VFD is capable of communicating with other components of the system architecture.

Phase 302 comprises maintaining by the variable frequency drive a block chain for storing license keys and transactions corresponding to hardware configurations of variable frequency drives.

Phase 304 comprises generating, by the variable frequency drive, a hardware fingerprint identifying a hardware configuration of the variable frequency drive.

Phase 306 authenticating, by the variable frequency drive, to a system for servicing variable frequency drives, using the generated hardware fingerprint.

Phase 308 downloading, by the variable frequency drive from the system, one or more software packages corresponding to the generated hardware fingerprint.

Phase 310 determining that the block chain comprises a new block comprising license keys corresponding to the generated hardware fingerprint.

Phase 312 activating one or more functionalities of the variable frequency drive, by applying the license keys to the downloaded software packages.

In phase 314 the VFD has license keys that are valid for the hardware configuration of the VFD and the SW packages, whereby the VFD may be operated according to functionalities provided by the SW packages and the method ends.

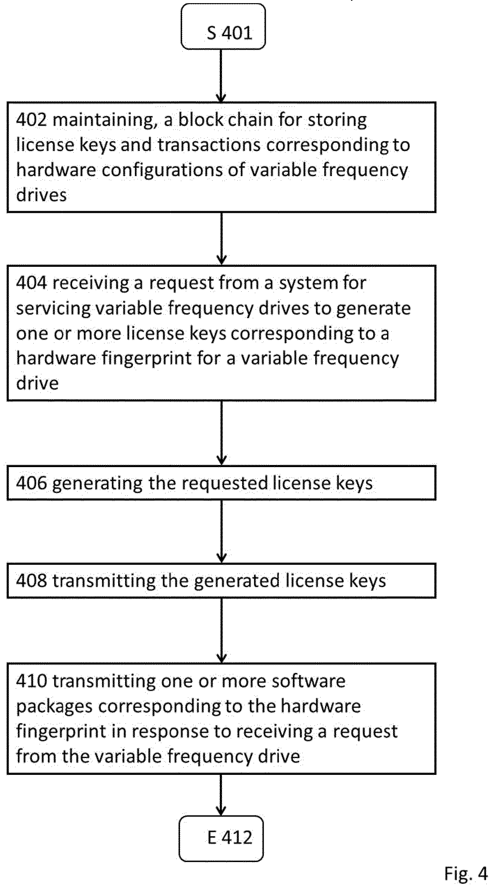

Fig. 4 illustrates a method for a licensor system in accordance with at least some embodiments of the present invention. The method may be performed by a licensor system 106 described with Fig. 1. Phase 401 comprises starting the method, when the licensor system is capable of communicating with other components of the system architecture.

Phase 402 comprises maintaining, by the licensor system, a block chain for storing license keys and transactions corresponding to hardware configurations of variable frequency drives.

Phase 404 comprises receiving, by the licensor system, a request from a system for servicing variable frequency drives to generate one or more license keys corresponding to a hardware fingerprint for a variable frequency drive.

Phase 406 comprises generating, by the licensor system, the requested license keys.

Phase 408 comprises transmitting, by the licensor system, the generated license keys to the system for servicing variable frequency drives.

Phase 410 comprises transmitting, by the licensor system, one or more software packages corresponding to the hardware fingerprint in response to receiving a request from the variable frequency drive.

In phase 412 the licensor system has facilitated maintaining the block chain with up-to-date license keys that correspond to the HW fingerprint of the VFD and the method ends.

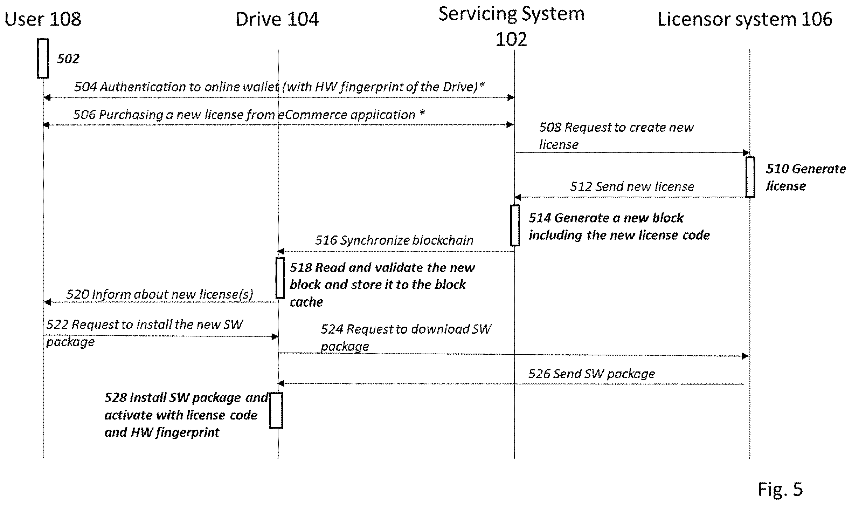

Fig. 5 illustrates a sequence in accordance with at least some embodiments of the present invention. The sequence is described with reference to components of the system architecture described with Fig. 1. The sequence provides servicing a VFD with license keys corresponding to HW configuration of the VFD.

Phase 502 comprises a user 108 opening an e-commerce application. Opening the e-commerce application may be caused by input of the user on a user interface of a user device, when the user device is connected to a servicing system 102. Phase 504 may comprise the user authenticating to his/her online wallet at the servicing system. The authentication may be performed based on credentials of the user and HW fingerprint of the VFD. In this way the servicing system may authenticate the user and that the user is located at the VFD. In an example of phase 504, the HW fingerprint and credentials may be entered by the user on the user interface, whereby the servicing system may authenticate the user. In another example of phase 504, the credentials of the user may be entered by the user on the user interface and encrypted by the HW fingerprint. For improved security instead of the HW fingerprint, the credentials of the user may be encrypted by a secret key, for example a private key, of the VFD. The servicing system may authenticate the user based on successful decoding the encrypted credentials.

Phase 506 may comprise purchasing a new license from the e-commerce application.

Phase 508 may comprise the servicing system transmitting a request to a licensor system 106 to create a new license. The request may comprise the HW fingerprint of the VFD.

Phase 510 comprises generating, by the licensor system 106, based on the HW fingerprint, one or more license keys corresponding to the HW fingerprint for the variable frequency drive.

Phase 512 comprises transmitting, by the licensor system 106, the generated license keys to the servicing system 102.

Phase 514 comprises causing to generate, by the servicing system 102, a new block to the block chain, said new block comprising the generated license keys and transaction information corresponding to the hardware fingerprint. The new block is generated to the block chain, when the block is validated. The block may be validated by well-known methods for validating blocks in a block chain.

Phase 516 comprises the servicing system 102 synchronizing the block chain stored at the VFD.

Phase 518 comprises that the VFD reads and validates the new block generated by the servicing system 102. The VFD stores the validated new block to the block cache.

Phase 520 comprises the VFD sending information indicating one or more new SW licenses. The information indicating one or more new SW licenses may serve for indicating that the purchase of the new license is completed. The new license allows installation of one or more new software packages to the user device.

Phase 522 comprises the user device sending a request to install the new software packages to the VFD. The request to install the new software packages may be sent to the VFD in response to receiving input from the user indicating acceptance of installing the new SW packages.

Phase 524 may comprise the VFD sending a request to download the SW packages to the licensor system.

Phase 526 comprises the licensor system sending the VFD the new SW packages based on the request. The new SW packages may be determined by the licensor system based on the block chain. Accordingly, the licensor system may check the block chain for determining software packages to be sent to the VFD.

Phase 528 comprises installing the new SW packages and applying the license keys to and HW fingerprint to the SW packages for activating one or more functionalities of the variable frequency drive.

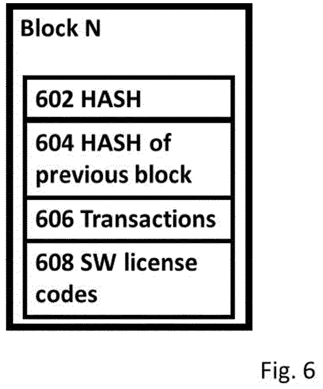

Fig. 6 illustrates an example of block of block chain in accordance with at least some embodiments of the present invention. The block comprises hash 602 that represent a current state of the block chain for storing license keys and transactions corresponding to hardware configurations of variable frequency drives. The block further comprises a hash 604 of a previous block. The hash of the previous block represents a previous state of the block chain. The block further comprises transactions 606 of the block. The transactions comprise purchases of new licenses by users and changes of HW configurations of VFDs. The block further comprises license keys 608 corresponding to HW configurations of VFDs.

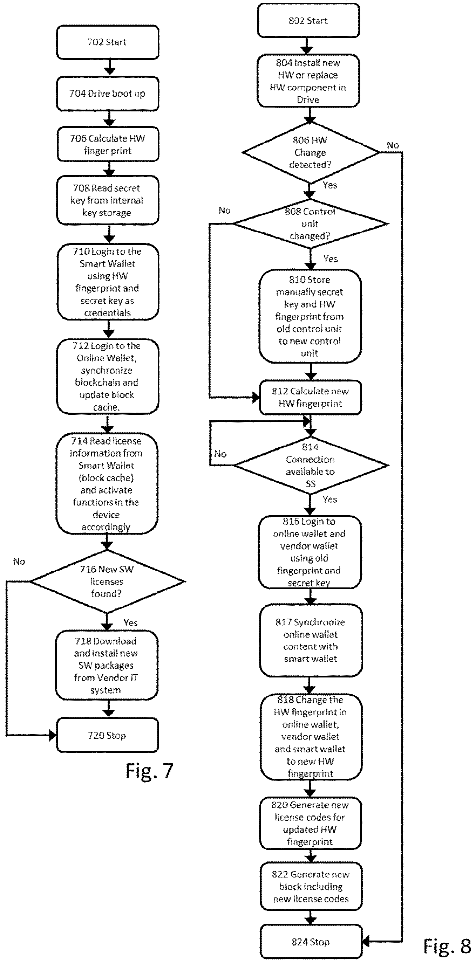

Fig. 7 illustrates a method for servicing a variable frequency drive with license keys in connection with drive boot. The method is described wit reference to components of the system architecture described with Fig. 1. The method may be performed by the VFD 104, when connected to other components of the system architecture.

Phase 702 comprises that the VFD 104 is started up by the user 108.

Phase 704 comprises boot up of the VFD 104.

Phase 706 comprises calculating a HW fingerprint of the VFD 104, for example in accordance with phase 304 in Fig. 3.

Phase 708 comprises reading a secret key of the VFD 104 from a memory. The memory may be an internal key storage of the VFD. In an example, the secret key may be a private key of the VFD, for example.

Phase 710 comprises login to a smart wallet of the VFD 104. The smart wallet may be login based on the secret key. The login to the smart wallet provides that functionalities of the smart wallet may be executed by the VFD.

Phase 712 comprises login to an online wallet at the servicing system 102, for example in accordance with phase 306 in Fig. 3. Login to the online wallet provides that a block cache stored to the smart wallet of the VFD 104 may be synchronized with the block chain maintained by the servicing system, in accordance with phase 516 in Fig. 5. Phases 714 and 716 provide an example of phase 518.

Phase 714 comprises reading license information from the smart wallet. Reading the license information from the smart wallet may comprise at least reading license keys corresponding to the HW configuration of the VFD 104 from the synchronized block cache.

Phase 716 comprises determining one or more new license keys, for example in accordance with phase 310 in Fig. 3. New license keys may be determined, when one or more current license keys of the VFD are stored to a block of the block chain and the block storing the current license keys is a previous block to a next block in the block chain comprising one or more license keys corresponding to the HW configuration of the VFD 104. If new license keys are determined the method proceeds to phase 718. Otherwise the method may proceed to phase 720.

Phase 718 comprises downloading and installing new SW packages from a licensor system 106, if new license keys are determined in Phase 716. In an example, phase 718 may be performed in accordance with phases 524 to 528 described with Fig. 5. The installing may comprise activating the SW packages in accordance with phase 312 in Fig. 3.

In phase 720 the VFD 104 has license keys and SW for operating the VFD according to functionalities provided by the SW packages and the method ends.

Fig. 8 illustrates a method for servicing a variable frequency drive with license keys in connection with a hardware configuration change of the variable frequency drive. The method is described wit reference to components of the system architecture described with Fig. 1. The method may be performed by components of the system architecture.

Phase 802 comprises that the VFD is configured with HW components and SW components. A secret key and a HW fingerprint are stored to the VFD 104. The VFD has license keys corresponding to a current HW configuration.

Phase 804 comprises installing one or more new HW components or replacing one or more existing HW components of the VFD. The installation may be performed by a service technician.

Phase 806 comprises determining, by the VFD, whether a change of one or more HW component has occurred. If no HW components have been changed, the method proceeds to phase 824. If a change of HW components has occurred the method proceeds to phase 808.

Phase 808 comprises determining, by the VFD, whether a change of a control unit has occurred, when the change of the HW components is determined in phase 806. Accordingly, phase 808 may comprise determining whether the changed HW component is the control unit. If a change of the control unit has occurred the method proceeds to phase 810. Otherwise the method may proceed to phase 812.

Phase 810 may comprise storing manually, e.g. by a service technician, the secret key and the HW fingerprint, i.e. an old HW fingerprint, from the old control unit to the new control unit.

Phase 812 comprises calculating, by the VFD, a new HW fingerprint of the VFD, for example in accordance with phase 304 in Fig. 3.

Phase 814 comprises determining, by the VFD, whether a connection to the servicing system is available. If connection to the servicing system is not available the availability of the connection to the servicing system may be determined anew in phase 814. Otherwise the method may proceed to phase 816.

Phase 816 comprises login, by the VFD, an online wallet at the servicing system and a vendor wallet at the licensor system using the secret key and the old HW fingerprint of the VFD. The old HW fingerprint may be the HW fingerprint that was stored to the VFD in phase 802 before changes to the HW components. Accordingly, the online wallet and the vendor wallet are login using old credentials. In this phase the local smart wallet at the VFD may be empty, when the control unit has been changed. The local smart wallet may be login by a secret key generated in connection with manufacturing to a secret key storage. In this way the there is no need to copy at the secret key from the old control unit.

Phase 817 comprises synchronizing the online wallet content with the smart wallet. In this way the content of the smart wallet may be downloaded from the online wallet. When the control unit has been changed, the content may be downloaded from the online wallet to the empty smart wallet.

Phase 818 comprises changing, by the VFD, the HW fingerprint stored to the smart wallet of the VFD, online wallet at the servicing system and the vendor wallet at the licensor system to the new HW fingerprint calculated in phase 812.

Phase 820 comprises generating one or more license keys corresponding to the HW fingerprint calculated in phase 812. The license keys may be generated for example as described with phase 510 in Fig. 5.

Phase 822 comprises generating, by the servicing system, a new block to the block chain, said new block comprising the generated license keys and transaction information corresponding to the hardware fingerprint. The new block may be generated for example as described with phase 514 in Fig. 5.

In phase 824 the block chain comprises the new license keys that are valid for the HW fingerprint of the VFD and the method ends.

At least in some embodiments, a system for servicing variable frequency drives, a variable frequency drive and a licensor system comprise means for performing one or more phases of methods described in an embodiment.

In an example, the means may comprise at least one processor; and at least one memory including computer program code, the at least one memory and computer program code configured to, with the at least one processor, cause the performance of the system for servicing variable frequency drives, variable frequency drive or licensor system.

In an example the means comprise a non-transitory computer readable medium having stored thereon a set of computer readable instructions that, when executed by at least one processor, cause the performance of the system for servicing variable frequency drives, variable frequency drive or licensor system.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The present invention is industrially applicable at least for variable frequency drives and systems associated with servicing variable frequency drives.

### ACRONYMS LIST

- HW: Hardware
- SS: Servicing System
- SW: Software
- VFD: Variable Frequency Drive

### REFERENCE SIGNS LIST

- 102: Servicing System
- 104: Variable Frequency Drive
- 106 a to d: Licensor Systems
- 108: User
- 201 - 212: Phases of Fig. 2
- 301 - 314: Phases of Fig. 3
- 401 - 412: Phases of Fig. 4
- 502 - 528: Items of the sequence in Fig. 5
- 602 - 608: Items of the block in Fig. 6
- 702 - 720: Phases of Fig. 7
- 802 - 824: Phases of Fig. 8

## Claims

1. A method for a system (102) for servicing variable frequency drives, comprising:
maintaining by the system (102) a block chain for storing license keys and transactions corresponding to hardware configurations of variable frequency drives;
obtaining, by the system (102) from a user device connected to the system (102), a hardware fingerprint identifying a hardware configuration of a variable frequency drive (104), the hardware fingerprint being specific to the hardware components over which the hardware fingerprint is calculated, whereby a change in any of the hardware components over which the hardware fingerprint is calculated results in a change of the hardware fingerprint;
determining, by the system (102), whether the hardware fingerprint is different than a previous hardware fingerprint of the variable frequency drive (104);
when the hardware fingerprint is different than a previous hardware fingerprint, generating, by the system (102), based on the hardware fingerprint, one or more license keys corresponding to the hardware fingerprint for the variable frequency drive (104); and
causing to generate, by the system (102), a new block to the block chain, said new block comprising the generated license keys and transaction information corresponding to the hardware fingerprint. The method further comprising: authenticating, the variable frequency drive using received hardware fingerprint generated by the variable frequency drive; and providing for download to the variable frequency drive, one or more software packages corresponding to the received hardware fingerprint;

2. The method according to claim 1, wherein the hardware fingerprint is used for encrypting license keys specific to the variable frequency drive (104).

3. The method according to claim 1 or 2, wherein the new block is generated after obtaining information indicating a purchase of a license is obtained from an online wallet of the user.

4. The method according to claim 1 or 2, wherein a request to generate at least part of the license keys is sent to a licensor system (106) after information indicating a purchase of a license is obtained from an online wallet of the user.

5. A method for a variable frequency drive (104), comprising:
maintaining by the variable frequency drive (104) a block chain for storing license keys and transactions corresponding to hardware configurations of variable frequency drives;
generating, by the variable frequency drive (104), a hardware fingerprint identifying a hardware configuration of the variable frequency drive (104), the hardware fingerprint being specific to the hardware components over which the hardware fingerprint is calculated, whereby a change in any of the hardware components over which the hardware fingerprint is calculated results in a change of the hardware fingerprint;
authenticating, by the variable frequency drive (104) to a system (102) for servicing variable frequency drives, using the generated hardware fingerprint;
downloading, by the variable frequency drive (104) from the system (102), one or more software packages corresponding to the generated hardware fingerprint;
determining that the block chain comprises a new block comprising license keys corresponding to the generated hardware fingerprint; and
activating one or more functionalities of the variable frequency drive (104), by applying the license keys to the downloaded software packages.

6. The method according to claim 5, wherein a request for software packages corresponding to the hardware fingerprint is transmitted to a licensor system (106) via a smart wallet of the variable frequency drive (104).

7. The method according to claim 5 or 6, wherein the block chain of the variable frequency drive (104) is synchronized with the system (102) for servicing variable frequency drives, and if the block chain comprises information of one or more new software packages, information indicating one or more new software licenses is sent to a user device, and downloading of the software packages is caused in response to receiving a request to install from the user device.

8. A system (102) for servicing variable frequency drives, comprising means for performing:
maintaining a block chain for storing license keys and transactions corresponding to hardware configurations of variable frequency drives;
obtaining from a user device connected to the system (102) a hardware fingerprint identifying a hardware configuration of a variable frequency drive (104), the hardware fingerprint being specific to the hardware components over which the hardware fingerprint is calculated, whereby a change in any of the hardware components over which the hardware fingerprint is calculated results in a change of the hardware fingerprint;
determining whether the hardware fingerprint is different than a previous hardware fingerprint of the variable frequency drive (104);
when the hardware fingerprint is different than a previous hardware fingerprint, generating based on the hardware fingerprint, one or more license keys corresponding to the hardware fingerprint for the variable frequency drive (104); and
generating a new block to the block chain, said new block comprising the generated license keys and transaction information corresponding to the hardware fingerprint.
authenticating, the variable frequency drive using received hardware fingerprint generated by the variable frequency drive; and providing for download to the variable frequency drive, one or more software packages corresponding to the received hardware fingerprint;

9. A variable frequency drive (104), comprising means for performing:
maintaining a block chain for storing license keys and transactions corresponding to hardware configurations of variable frequency drives;
generating a hardware fingerprint identifying a hardware configuration of the variable frequency drive (104), the hardware fingerprint being specific to the hardware components over which the hardware fingerprint is calculated, whereby a change in any of the hardware components over which the hardware fingerprint is calculated results in a change of the hardware fingerprint;
authenticating to a system (102) for servicing variable frequency drives, using the generated hardware fingerprint;
downloading from the system (102) one or more software packages corresponding to the generated hardware fingerprint;
determining that the block chain comprises a new block comprising license keys corresponding to the generated hardware fingerprint; and
activating one or more functionalities of the variable frequency drive (104), by applying the license keys to the downloaded software packages.

10. The system (102) for servicing variable frequency drives according to claim 8 or a variable frequency drive (104) according to claim 9, wherein the means comprises at least one processor and at least one memory including computer program code.

## Patentansprüche

1. Verfahren für ein System (102) zur Wartung von Frequenzumrichtern, umfassend:
Beibehalten durch das System (102) einer Blockchain zum Speichern von Lizenzschlüsseln und Transaktionen, die Hardwarekonfigurationen von Frequenzumrichtern entsprechen;
Erhalten durch das System (102) von einer mit dem System (102) verbundenen Benutzervorrichtung eines Hardware-Fingerabdrucks, der eine Hardwarekonfiguration eines Frequenzumrichters (104) identifiziert, wobei der Hardware-Fingerabdruck für die Hardwarekomponenten spezifisch ist, über die der Hardware-Fingerabdruck berechnet wird, wobei eine Änderung an einer der Hardwarekomponenten, über die der Hardware-Fingerabdruck berechnet wird, zu einer Änderung des Hardware-Fingerabdrucks führt;
Bestimmen durch das System (102), ob sich der Hardware-Fingerabdruck von einem früheren Hardware-Fingerabdruck des Frequenzumrichters (104) unterscheidet;
wenn sich der Hardware-Fingerabdruck von einem früheren Hardware-Fingerabdruck unterscheidet, Erzeugen durch das System (102) eines oder mehrerer Lizenzschlüssel basierend auf dem Hardware-Fingerabdruck, die dem Hardware-Fingerabdruck für den Frequenzumrichter (104) entsprechen; und
Bewirken des Erzeugens durch das System (102) eines neuen Blocks für die Blockchain, wobei der neue Block die erzeugten Lizenzschlüssel und Transaktionsinformationen umfasst, die dem Hardware-Fingerabdruck entsprechen. Wobei das Verfahren weiter umfasst: Authentifizieren des Frequenzumrichters unter Verwendung eines empfangenen Hardware-Fingerabdrucks, der von dem Frequenzumrichter erzeugt wurde; und Bereitstellen zum Herunterladen auf den Frequenzumrichter eines oder mehrerer Softwarepakete, die dem empfangenen Hardware-Fingerabdruck entsprechen.

2. Verfahren nach Anspruch 1, wobei der Hardware-Fingerabdruck zum Verschlüsseln von Lizenzschlüsseln verwendet wird, die für den Frequenzumrichter (104) spezifisch sind.

3. Verfahren nach Anspruch 1 oder 2, wobei der neue Block erzeugt wird, nachdem aus einer Online-Geldbörse des Benutzers Informationen erhalten wurden, die einen Kauf einer Lizenz anzeigen.

4. Verfahren nach Anspruch 1 oder 2, wobei eine Anfrage zum Erzeugen zumindest eines Teils der Lizenzschlüssel an ein Lizenzgebersystem (106) gesendet wird, nachdem aus einer Online-Geldbörse des Benutzers Informationen erhalten wurden, die einen Kauf einer Lizenz anzeigen.

5. Verfahren für einen Frequenzumrichter (104), umfassend:
Beibehalten durch den Frequenzumrichter (104) einer Blockchain zum Speichern von Lizenzschlüsseln und Transaktionen, die Hardwarekonfigurationen von Frequenzumrichtern entsprechen;
Erzeugen durch den Frequenzumrichter (104) eines Hardware-Fingerabdrucks, der eine Hardwarekonfiguration des Frequenzumrichters (104) identifiziert, wobei der Hardware-Fingerabdruck spezifisch für die Hardwarekomponenten ist, über die der Hardware-Fingerabdruck berechnet wird, wodurch eine Änderung an einer der Hardwarekomponenten, über die der Hardware-Fingerabdruck berechnet wird, zu einer Änderung des Hardware-Fingerabdrucks führt;
Authentifizieren durch den Frequenzumrichter (104) in einem System (102) zur Wartung von Frequenzumrichtern unter Verwendung des erzeugten Hardware-Fingerabdrucks;
Herunterladen durch den Frequenzumrichter (104) aus dem System (102) eines oder mehrerer Softwarepakete, die dem erzeugten Hardware-Fingerabdruck entsprechen;
Bestimmen, dass die Blockchain einen neuen Block umfasst, der Lizenzschlüssel umfasst, die dem erzeugten Hardware-Fingerabdruck entsprechen; und
Aktivieren einer oder mehrerer Funktionalitäten des Frequenzumrichters (104) durch Anwenden der Lizenzschlüssel auf die heruntergeladenen Softwarepakete.

6. Verfahren nach Anspruch 5, wobei eine Anfrage nach Softwarepaketen, die dem Hardware-Fingerabdruck entsprechen, über eine intelligente Geldbörse des Frequenzumrichters (104) an ein Lizenzgebersystem (106) übertragen wird.

7. Verfahren nach Anspruch 5 oder 6, wobei die Blockchain des Frequenzumrichters (104) mit dem System (102) zur Wartung von Frequenzumrichtern synchronisiert wird, und wenn die Blockchain Informationen über ein oder mehrere neue Softwarepakete umfasst, Informationen, die eine oder mehrere neue Softwarelizenzen anzeigen, an eine Benutzervorrichtung gesendet werden, und Herunterladen der Softwarepakete als Reaktion auf Empfangen einer Installationsanfrage von der Benutzervorrichtung bewirkt wird.

8. System (102) zur Wartung von Frequenzumrichtern, umfassend Mittel zum Durchführen von:
Beibehalten einer Blockchain zum Speichern von Lizenzschlüsseln und Transaktionen, die Hardwarekonfigurationen von Frequenzumrichtern entsprechen;
Erhalten von einer mit dem System (102) verbundenen Benutzervorrichtung eines Hardware-Fingerabdrucks, der eine Hardwarekonfiguration eines Frequenzumrichters (104) identifiziert, wobei der Hardware-Fingerabdruck für die Hardwarekomponenten spezifisch ist, über die der Hardware-Fingerabdruck berechnet wird, wobei eine Änderung an einer der Hardwarekomponenten, über die der Hardware-Fingerabdruck berechnet wird, zu einer Änderung des Hardware-Fingerabdrucks führt;
Bestimmen, ob sich der Hardware-Fingerabdruck von einem früheren Hardware-Fingerabdruck des Frequenzumrichters (104) unterscheidet;
wenn sich der Hardware-Fingerabdruck von einem früheren Hardware-Fingerabdruck unterscheidet, Erzeugen eines oder mehrerer Lizenzschlüssel basierend auf dem Hardware-Fingerabdruck, die dem Hardware-Fingerabdruck für den Frequenzumrichter (104) entsprechen; und
Erzeugens eines neuen Blocks für die Blockchain, wobei der neue Block die erzeugten Lizenzschlüssel und Transaktionsinformationen umfasst, die dem Hardware-Fingerabdruck entsprechen.
Authentifizieren des Frequenzumrichters unter Verwendung eines empfangenen Hardware-Fingerabdrucks, der von dem Frequenzumrichter erzeugt wurde; und Bereitstellen zum Herunterladen auf den Frequenzumrichter eines oder mehrerer Softwarepakete, die dem empfangenen Hardware-Fingerabdruck entsprechen;

9. Frequenzumrichter (104), umfassend Mittel zum Durchführen von:
Beibehalten einer Blockchain zum Speichern von Lizenzschlüsseln und Transaktionen, die Hardwarekonfigurationen von Frequenzumrichtern entsprechen;
Erzeugen eines Hardware-Fingerabdrucks, der eine Hardwarekonfiguration des Frequenzumrichters (104) identifiziert, wobei der Hardware-Fingerabdruck spezifisch für die Hardwarekomponenten ist, über die der Hardware-Fingerabdruck berechnet wird, wodurch eine Änderung an einer der Hardwarekomponenten, über die der Hardware-Fingerabdruck berechnet wird, zu einer Änderung des Hardware-Fingerabdrucks führt;
Authentifizieren in einem System (102) zur Wartung von Frequenzumrichtern unter Verwendung des erzeugten Hardware-Fingerabdrucks;
Herunterladen aus dem System (102) eines oder mehrerer Softwarepakete, die dem erzeugten Hardware-Fingerabdruck entsprechen;
Bestimmen, dass die Blockchain einen neuen Block umfasst, der Lizenzschlüssel umfasst, die dem erzeugten Hardware-Fingerabdruck entsprechen; und
Aktivieren einer oder mehrerer Funktionalitäten des Frequenzumrichters (104) durch Anwenden der Lizenzschlüssel auf die heruntergeladenen Softwarepakete.

10. System (102) zur Wartung von Frequenzumrichtern nach Anspruch 8 oder Frequenzumrichter (104) nach Anspruch 9, wobei die Mittel mindestens einen Prozessor und mindestens einen Speicher, der einen Computerprogrammcode beinhaltet, umfassen.

## Revendications

1. Procédé pour un système (102) pour entretenir des mécanismes d'entraînement à fréquence variable, comprenant :
la conservation, par le système (102), d'une chaîne de blocs pour stocker des clés de licence et des transactions correspondant à des configurations matérielles de mécanismes d'entraînement à fréquence variable ;
l'obtention, par le système (102) à partir d'un dispositif utilisateur connecté au système (102), d'une empreinte matérielle identifiant une configuration matérielle d'un mécanisme d'entraînement à fréquence variable (104), l'empreinte matérielle étant spécifique aux composants matériels sur lesquels l'empreinte matérielle est calculée, selon lequel une modification de l'un quelconque des composants matériels sur lesquels l'empreinte matérielle est calculée, entraîne une modification de l'empreinte matérielle ;
la détermination, par le système (102), pour savoir si l'empreinte matérielle est différente d'une précédente empreinte matérielle du mécanisme d'entraînement à fréquence variable (104) ;
lorsque l'empreinte matérielle est différente d'une précédente empreinte matérielle, la génération, par le système (102), sur la base de l'empreinte matérielle, d'une ou de plusieurs clés de licence correspondant à l'empreinte matérielle pour le mécanisme d'entraînement à fréquence variable (104) ; et
le fait de provoquer la génération, par le système (102), d'un nouveau bloc dans la chaîne de blocs, ledit nouveau bloc comprenant les clés de licence générées et les informations de transaction correspondant à l'empreinte matérielle. Procédé comprenant en outre : l'authentification du mécanisme d'entraînement à fréquence variable à l'aide d'une empreinte matérielle reçue générée par le mécanisme d'entraînement à fréquence variable ; et la fourniture, pour le téléchargement vers le mécanisme d'entraînement à fréquence variable, d'un ou de plusieurs progiciels correspondant à l'empreinte matérielle reçue ;

2. Procédé selon la revendication 1, dans lequel l'empreinte matérielle est utilisée pour crypter des clés de licence spécifiques au mécanisme d'entraînement à fréquence variable (104).

3. Procédé selon la revendication 1 ou 2, dans lequel le nouveau bloc est généré après l'obtention d'informations indiquant qu'un achat d'une licence est obtenu à partir d'un portefeuille en ligne de l'utilisateur.

4. Procédé selon la revendication 1 ou 2, dans lequel une demande de génération d'au moins une partie des clés de licence est envoyée à un système donneur de licence (106) après que des informations indiquant un achat d'une licence aient été obtenues à partir d'un portefeuille en ligne de l'utilisateur.

5. Procédé pour un mécanisme d'entraînement à fréquence variable (104), comprenant :
la conservation, par le mécanisme d'entraînement à fréquence variable (104), d'une chaîne de blocs pour stocker des clés de licence et des transactions correspondant à des configurations matérielles de mécanismes d'entraînement à fréquence variable ;
la génération, par le mécanisme d'entraînement à fréquence variable (104), d'une empreinte matérielle identifiant une configuration matérielle du mécanisme d'entraînement à fréquence variable (104), l'empreinte matérielle étant spécifique aux composants matériels sur lesquels l'empreinte matérielle est calculée, selon lequel un changement dans l'un quelconque des composants matériels sur lesquels l'empreinte matérielle est calculée, entraîne une modification de l'empreinte matérielle ;
l'authentification, par le mécanisme d'entraînement à fréquence variable (104), auprès d'un système (102) pour entretenir des mécanismes d'entraînement à fréquence variable, à l'aide de l'empreinte matérielle générée ;
le téléchargement, par le mécanisme d'entraînement à fréquence variable (104) à partir du système (102), d'un ou de plusieurs progiciels correspondant à l'empreinte matérielle générée ;
la détermination que la chaîne de blocs comprend un nouveau bloc comprenant des clés de licence correspondant à l'empreinte matérielle générée ; et
l'activation d'une ou de plusieurs fonctionnalités du mécanisme d'entraînement à fréquence variable (104), en appliquant les clés de licence aux progiciels téléchargés.

6. Procédé selon la revendication 5, dans lequel une demande de progiciels correspondant à l'empreinte matérielle est transmise à un système donneur de licence (106) par le biais d'un portefeuille intelligent du mécanisme d'entraînement à fréquence variable (104).

7. Procédé selon la revendication 5 ou 6, dans lequel la chaîne de blocs du mécanisme d'entraînement à fréquence variable (104) est synchronisée avec le système (102) de révision de mécanismes d'entraînement à fréquence variable et, si la chaîne de blocs comprend des informations d'un ou de plusieurs nouveaux progiciels, des informations indiquant une ou plusieurs nouvelles licences logicielles sont envoyées à un dispositif utilisateur et le téléchargement des progiciels est provoqué à la suite de la réception d'une demande d'installation en provenance du dispositif utilisateur.

8. Système (102) pour entretenir des mécanismes d'entraînement à fréquence variable, comprenant des moyens pour effectuer :
la conservation d'une chaîne de blocs pour stocker des clés de licence et des transactions correspondant à des configurations matérielles de mécanismes d'entraînement à fréquence variable ;
l'obtention, à partir d'un dispositif utilisateur connecté au système (102), d'une empreinte matérielle identifiant une configuration matérielle d'un mécanisme d'entraînement à fréquence variable (104), l'empreinte matérielle étant spécifique aux composants matériels sur lesquels l'empreinte matérielle est calculée, selon lequel une modification de l'un quelconque des composants matériels sur lesquels l'empreinte matérielle est calculée, entraîne une modification de l'empreinte matérielle ;
la détermination pour savoir si l'empreinte matérielle est différente d'une précédente empreinte matérielle du mécanisme d'entraînement à fréquence variable (104) ;
lorsque l'empreinte matérielle est différente d'une précédente empreinte matérielle, la génération, sur la base de l'empreinte matérielle, d'une ou d' plusieurs clés de licence correspondant à l'empreinte matérielle pour le mécanisme d'entraînement à fréquence variable (104) ; et
la génération d'un nouveau bloc dans la chaîne de blocs, ledit nouveau bloc comprenant les clés de licence générées et les informations de transaction correspondant à l'empreinte matérielle.
l'authentification du mécanisme d'entraînement à fréquence variable à l'aide d'une empreinte matérielle reçue générée par le mécanisme d'entraînement à fréquence variable ; et la fourniture, pour le téléchargement vers le mécanisme d'entraînement à fréquence variable, d'un ou de plusieurs progiciels correspondant à l'empreinte matérielle reçue ;

9. Mécanisme d'entraînement à fréquence variable (104), comprenant des moyens pour effectuer :
la conservation d'une chaîne de blocs pour stocker des clés de licence et des transactions correspondant à des configurations matérielles de mécanismes d'entraînement à fréquence variable ;
la génération d'une empreinte matérielle identifiant une configuration matérielle du mécanisme d'entraînement à fréquence variable (104), l'empreinte matérielle étant spécifique aux composants matériels sur lesquels l'empreinte matérielle est calculée, selon lequel un changement dans l'un quelconque des composants matériels sur lesquels l'empreinte matérielle est calculée, entraîne une modification de l'empreinte matérielle ;
l'authentification, auprès d'un système (102) pour entretenir des mécanismes d'entraînement à fréquence variable, à l'aide de l'empreinte matérielle générée ;
le téléchargement, à partir du système (102), d'un ou de plusieurs progiciels correspondant à l'empreinte matérielle générée ;
la détermination que la chaîne de blocs comprend un nouveau bloc comprenant des clés de licence correspondant à l'empreinte matérielle générée ; et
l'activation d'une ou de plusieurs fonctionnalités du mécanisme d'entraînement à fréquence variable (104), en appliquant les clés de licence aux progiciels téléchargés.

10. Système (102) pour entretenir des mécanismes d'entraînement à fréquence variable selon la revendication 8 ou un mécanisme d'entraînement à fréquence variable (104) selon la revendication 9, dans lequel les moyens comprennent au moins un processeur et au moins une mémoire incluant un code de programme informatique.
